# EUROPÄISCHE PATENTSCHRIFT

(11) **EP 2 317 526 B1**
(45) Veröffentlichungstag und Bekanntmachung des Hinweises auf die Patenterteilung: **13.03.2013**
(21) Anmeldenummer: 09306039.0
(22) Anmeldetag: 30.10.2009
(51) Int. Cl.: H01B 12/16

(54) **System mit mindestens einem supraleitfähigen Kabel**
System comprising at least one superconducting cable
Système comprenant d'au moins un câble supraconducteur

(43) Veröffentlichungstag der Anmeldung: 04.05.2011
(73) Patentinhaber: Nexans, 75008 Paris (FR)
(72) Erfinder: Dr.-Ing. Stemmle, Mark, 30161, Hannover (DE); Dr. Soika, Rainer, 30559, Hannover (DE)
(74) Vertreter: Döring, Roger

(56) Entgegenhaltungen:
- EP-A- 1 720 176
- EP-A- 1 887 584
- US-A- 3 735 018
- US-A1- 2002 153 162

## Beschreibung

Die Erfindung bezieht sich auf ein System mit mindestens einem supraleitfähigen Kabel gemäß dem Oberbegriff des Patentanspruchs.

Ein solches System geht aus der US 2002/0153162 A1 hervor.

Ein supraleitfähiges Kabel hat in heutiger Technik elektrische Leiter aus einem Verbundwerkstoff, welcher keramisches Material enthält, das bei ausreichend tiefen Temperaturen in den supraleitfähigen Zustand übergeht. Der elektrische Gleichstromwiderstand eines entsprechend aufgebauten Leiters ist bei ausreichender Kühlung Null, solange eine bestimmte Stromstärke nicht überschritten wird. Geeignete keramische Materialien sind beispielsweise YBCO (Yttrium-Barium-Kupfer-Oxid) oder BSCCO (Wismut-Strontium-Kalzium-Kupfer-Oxid). Ausreichend niedrige Temperaturen, um ein derartiges Material in den supraleitfähigen Zustand zu bringen, liegen beispielsweise zwischen 67 K und 110 K. Geeignete Kühlmittel sind beispielsweise Stickstoff, Helium, Neon und Wasserstoff oder Gemische dieser Stoffe.

Aus der DE 601 29 172 T2 geht ein Stromtransportsystem mit einem supraleitenden Kabel mit kaltem Dielektrikum hervor, das in einem aus zwei konzentrisch zueinander angeordneten und durch eine Vakuumisolierung voneinander getrennten Rohren bestehenden Kryostat angeordnet ist. Das Kabel hat einen auf einem rohrförmigen Träger angebrachten supraleitfähigen Leiter, ein denselben umgebendes Dielektrikum und einen über demselben angebrachten supraleitfähigen Rückleiter. Es ist unter Freilassung eines Freiraums zum Durchleiten eines Kühlmittels, das auch durch den rohrförmigen Träger geleitet werden kann, in dem Kryostat angeordnet. Ein solches System hat relativ hohe elektrische Wechselstromverluste, so daß wegen der erhöhten elektrischen Feldstärke ein verhältnismäßig dickes isolierendes Dielektrikum benötigt wird. Die Abmessungen des Kabels und dementsprechend auch die des Kryostats sind entsprechend groß.

Bei dem System nach der EP 1 720 176 B1 ist ein supraleitfähiges Kabel mit wellenförmigem Verlauf in einem Kryostat angeordnet, der aus zwei konzentrisch zueinander angeordneten metallischen Rohren besteht, die quer zu ihrer Längsrichtung gewellt sind. Zwischen den Rohren befindet sich eine Vakuumisolierung. Der wellenförmige Verlauf des Kabels wird durch ein an demselben an bestimmten Punkten befestigtes Netzwerk sichergestellt. Es soll dabei die beim Abkühlen des Kabels auftretende Kontraktion desselben kompensiert werden. Auch bei diesem System umschließt der Kryostat neben dem Kabel einen Hohlraum zum Durchleiten eines Kühlmittels, so daß die gleichen Mängel wie beim System nach der DE 601 29 172 T2 bestehen.

Aus der eingangs erwähnten US 2002/0153162 A1 geht ein System mit einem von einem Kryostat umgebenen supraleitfähigen Kabel hervor, das einen supraleitfähigen Leiter aufweist. Der Kryostat besteht aus zwei mit Abstand konzentrisch zueinander angeordneten, quer zu ihrer Längsrichtung gewellten metallischen Rohren, zwischen denen eine Vakuumisolierung angeordnet ist. Das Kabel weist einen zentralen rohrförmigen Träger zum Durchleiten eines Kühlmittels auf, auf dem der supraleitfähige Leiter aufliegt, welcher rundum von einer aus Isoliermaterial bestehenden Pufferschicht umgeben ist. Das innere Rohr des Kryostats liegt mit seinen nach innen weisenden Wellentälern an der Pufferschicht an.

Der Erfindung liegt die Aufgabe zugrunde, das eingangs geschilderte System so weiterzubilden, daß einerseits die elektrischen Wechselstromverluste und andererseits die elektrische Feldstärke im Dielektrikum reduziert werden können und daß eine beim Abkühlen des Kabels auftretende Kontraktion ausgeglichen werden kann.

Diese Aufgabe wird entsprechend den kennzeichnenden Merkmalen des Patentanspruchs gelöst.

Bei diesem System liegt das Innenrohr des Kryostats ohne wesentlichen Freiraum unter Zwischenschaltung der Pufferschicht am supraleitfähigen Kabel an, so daß zumindest die radialen Abmessungen des Kryostats verkleinert werden können. Diese radialen Abmessungen sind dadurch weiter verkleinert, daß die Wellentäler des Innenrohrs in die Pufferschicht eingedrückt sind. Die aus dem Innenrohr des Kryostats und dem supraleitfähigen Kabel bestehende, auf diese Weise eng verbundene Einheit ist außerdem mit einer Überlänge von etwa 0,3 % in dem Außenrohr des Kryostats angeordnet. Das wird wegen der guten Biegbarkeit des gewellten Innenrohrs und gleichzeitiger mechanischer Stabilität desselben durch Verformung der angegebenen Einheit in Wellenform erreicht. Es kann dadurch auf einfache Weise die beim Abkühlen des Kabels auftretende Kontraktion desselben kompensiert werden.

Das Kühlmittel fließt bei diesem System nahezu ausschließlich durch den zentralen rohrförmigen Träger, so daß eine direkte Kühlung des supraleitfähigen Leiters erreicht wird. Dadurch kann die Temperatur des Leiters wesentlich besser überwacht werden, als bei einem System mit einem das Kabel umgebenden Hohlraum des Kryostats zur Durchleitung des Kühlmittels. Die Wechselstromverluste des Kabels und damit die Feldstärke im Dielektrikum sind ebenfalls reduziert, so daß auch die Dicke des Dielektrikums verkleinert werden kann. Insgesamt ergibt sich ein System mit verbesserten elektrischen Eigenschaften und kleineren äußeren Abmessungen.

Ausführungsbeispiele des Erfindungsgegenstandes sind in den Zeichnungen dargestellt.

Es zeigen:
Fig. 1 einen Querschnitt durch ein System nach der Erfindung.
Fig. 2 einen teilweisen Längsschnitt durch das System nach Fig. 1.
Fig. 3 eine gegenüber Fig. 2 abgewandelte Ausführungsform des Systems.

In dem Kryostat ist mindestens ein supraleitfähiges Kabel angeordnet, das von einer Pufferschicht umgeben ist, an welcher das Innenrohr des Kryostats anliegt. Es könnten auch mehr als ein supraleitfähiges Kabel, beispielsweise drei Kabel, in dem Kryostat untergebracht sein, die gemeinsam von der Pufferschicht umgeben sind. Im folgenden wird - stellvertretend für alle möglichen Ausführungsformen - ein System mit einem supraleitfähigen Kabel beschrieben.

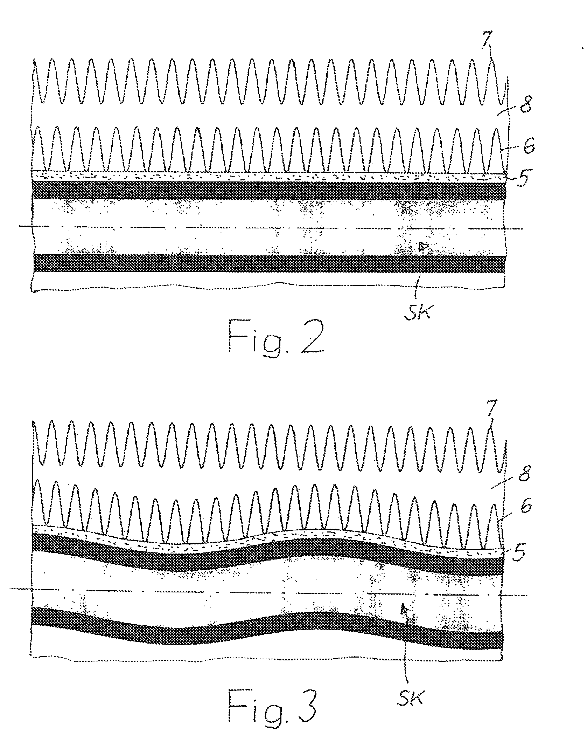

In den Fig. 2 und 3 ist das supraleitfähige Kabel nur schematisch wiedergegeben, während die Pufferschicht und das sie umgebende Innenrohr des Kryostats genauer dargestellt sind.

Mit 1 ist ein vorzugsweise aus Kupfer bestehendes Rohr bezeichnet, das als Glattrohr ausgeführt sein kann, das aber auch zur Verbesserung seiner Biegbarkeit quer zu seiner Längsrichtung gewellt sein kann. Das Rohr 1 dient einerseits als rohrförmiger Träger für ein supraleitfähiges Kabel SK, das aus einem um das Rohr 1 herum angeordneten supraleitfähigen Leiter 2, einem denselben umgebenden Dielektrikum 3 und einem über demselben angeordneten Schirm 4 aus supraleitfähigem Material besteht. Es dient andererseits zum Durchleiten des Kühlmittels, mittels dessen das Kabel SK bzw. sein Leiter 2 und sein Schirm 4 in den supraleitfähigen Zustand gebracht werden.

Das Kabel SK ist von einer dem mechanischen Schutz dienenden Pufferschicht 5 aus Isoliermaterial umgeben. Sie besteht mit Vorteil aus Kunststoff, wie beispielsweise Polytretrafluorethylen oder Polyethylen, und kann beispielsweise bei der Herstellung des Kabels SK durch Extrusion auf den Schirm 4 aufgebracht werden. Die Pufferschicht 5 kann aber auch durch nachträgliches Aufwickeln eines Bandes aus Isoliermaterial auf den Schirm 4 erzeugt werden. Sie kann beispielsweise eine zwischen 2 mm und 10 mm liegende Wandstärke haben.

Um die Pufferschicht 5 herum wird in bekannter Technik ein Innenrohr 6 eines das Kabel SK umgebenden Kryostats KR herumgeformt, der aus dem Innenrohr 6 und einem dasselbe mit Abstand umgebenden Außenrohr 7 besteht. Zwischen Innenrohr 6 und Außenrohr 7 ist eine Vakuumisolierung 8 angebracht. Sowohl Innenrohr 6 als auch Außenrohr 7 sind quer zu ihrer Längsrichtung gewellt. Die Wellung kann ringförmig oder schraubenlinienförmig ausgeführt sein. Das Innenrohr 6 dringt mit seinen nach innen weisenden Wellentälern zumindest geringfügig in die Pufferschicht 5 ein. Bei einer schraubenlinienförmigen Wellung des Innenrohrs 6 verbleibt zwischen demselben und der Pufferschicht 5 ein wendelförmig verlaufender Zwischenraum, durch welchen ebenfalls Kühlmittel geleitet werden kann.

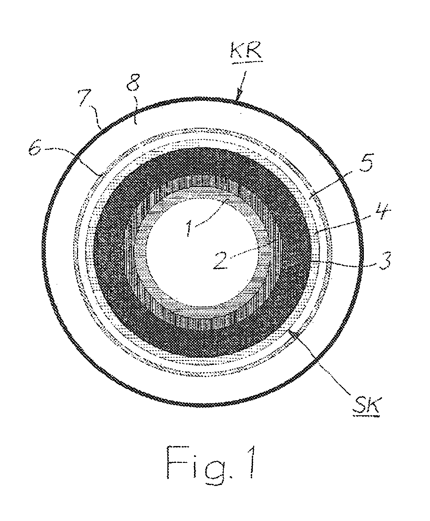

Zur Fertigstellung des Systems nach den Fig. 1 und 2 wird das Außenrohr 7 unter Zwischenschaltung von Abstandshaltern konzentrisch um das Innenrohr 6 herumgeformt. Der Spalt zwischen Innenrohr 6 und Außenrohr 7 des Kryostats KR wird abschließend zur Erzeugung der Vakuumisolierung 8 evakuiert.

Gemäß Fig. 3 wird die aus Kabel SK mit Pufferschicht 5 und eng umgebendem Innenrohr 6 bestehende Einheit wellenförmig verformt, so daß sie gegenüber der geradlinig gestreckten Form eine um etwa 0,3 % vergrößerte Länge hat. Um die wellenförmige verformte Einheit wird dann, wie schon beschrieben, das Außenrohr 7 mit Abstand herumgeformt, und zwar konzentrisch zur neutralen Achse der wellenförmigen Einheit. Die dabei eingesetzten Abstandshalter sind an die Wellenform des Innenrohrs 6 angepaßt.

## Patentansprüche

1. System mit mindestens einem supraleitfähigen Kabel (SK), das mindestens einen supraleitfähigen Leiter (2) aufweist, und einem dasselbe umgebenden Kryostat (KR), der aus zwei mit Abstand konzentrisch zueinander angeordneten, quer zu ihrer Längsrichtung gewellten metallischen Rohren besteht, einem Innenrohr (6) und einem Außenrohr (7), zwischen denen eine Vakuumisolierung (8) angeordnet ist, bei welchem das Kabel (SK) einen zentralen rohrförmigen Träger zum Durchleiten eines Kühlmittels aufweist, auf dem der supraleitfähige Leiter (2) aufliegt, bei welchem das Kabel (SK) rundum von einer dasselbe vor mechanischen Beschädigungen schützenden, aus Isoliermaterial bestehenden Pufferschicht (5) umgeben ist, **dadurch gekennzeichnet,**
- **daß** die nach innen weisenden Wellentäler des Innenrohrs (6) des Kryostats (KR) zumindest geringfügig in die Pufferschicht (5) eingedrückt sind und
- **daß** das Kabel (SK) und das dasselbe eng umgebende Innenrohr (6) des Kryostats (KR) zur Erzeugung einer gegenüber der geradlinig gestreckten Form größeren Länge von etwa 0,3 % wellenförmig verformt im Außenrohr (7) des Kryostats (KR) angeordnet sind.

## Claims

1. System having at least one superconductive cable (SK) which has at least one superconductive conductor (2), and having a cryostat (KR) which surrounds the same and consists of two metallic tubes, an inner tube (6) and an outer tube (7), which are arranged concentrically at a distance from one another, are corrugated transversely with respect to their longitudinal direction and between which a vacuum insulation (8) is arranged, in which system the cable (SK) has a central tubular support for passing a coolant through, on which the superconductive conductor (2) is placed and, in which the cable (SK) is surrounded all around by a buffer layer (5) which protects the same against mechanical damage and consists of insulating material, **characterized in**
- **that** the corrugation troughs of the inner tube (6) of the cryostat which face inwards penetrate at least slightly into the bufferlayer(5) and
- **that** the c a b le (SK) and the inner tube (6) of the cryostat, which closely surrounds it, ly in a wave like form within the cryostat in order to produce a length which is approximately 0, 3 % greater than its straight-lined form.

## Revendications

1. Système comprenant au moins un câble supraconducteur (SK), qui présente au moins un conducteur supraconducteur (2), et comprenant un cryostat (KR) entourant celui-ci, lequel se compose de deux tubes métalliques enroulés transversalement à leur direction longitudinale et disposés à distance concentriquement l'un à l'autre, un tube interne (6) et un tube externe (7), entre lesquels est disposée une isolation sous vide (8), le câble (SK) présentant un support central tubulaire pour conduire un réfrigérant, sur lequel support repose le conducteur supraconducteur (2), le câble (SK) étant entouré tout autour par une couche tampon (5) constituée de matériau isolant, protégeant le câble contre les endommagements mécaniques, **caractérisé en ce**
- **que** les creux d'ondulation tournés vers l'intérieur du tube interne (6) du cryostat (KR) sont au moins légèrement enfoncés dans la couche tampon (5) et
- **que** le câble (SK) et le tube interne (6) du cryostat (KR) l'entourant étroitement, sont disposés de manière à produire une longueur plus importante d'environ 0,3 % par rapport à la forme étirée rectiligne, de manière déformée sous forme ondulée dans le tube externe (7) du cryostat (KR).
